# NOUVEAU FASCICULE DE BREVET EUROPEEN

(11) **EP 0 706 919 B2**
(45) Date de publication et mention de la décision concernant l'opposition: **10.04.2002**
(45) Mention de la délivrance du brevet: 10.06.1998
(21) Numéro de dépôt: 95115616.5
(22) Date de dépôt: 04.10.1995
(51) Int. Cl.: B60R 25/02

(54) **Antivol de direction pour un véhicule automobile équipé d'une boîte de vitesses automatique**
Lenkradschloss für Kraftfahrzeuge mit einem Automatikgetriebe
Steering lock for motor vehicles with an automatic transmission

(30) Priorité: 10.10.1994 FR 9412142
(43) Date de publication de la demande: 17.04.1996
(73) Titulaire: VALEO SECURITE HABITACLE, 94000 Créteil (FR)
(72) Inventeur: Quillard, Frédéric, F-58000 Nevers (FR); Canard, Louis, F-58000 Nevers (FR)
(74) Mandataire: Kohn, Philippe

(56) Documents cités:
- EP-A- 0 336 219
- CA-A- 1 138 076
- DE-A- 4 206 251
- DE-U- 6 914 368
- DE-U- 8 802 327
- GB-A- 2 211 545
- US-A- 3 673 829
- US-A- 3 688 861
- US-A- 3 887 029
- US-A- 5 036 686
- US-A- 5 065 604
- US-A- 5 096 033
- PATENT ABSTRACTS OF JAPAN vol. 15 no. 49 (M-1079) ,24 Avril 1989 & JP-A-02 283962 (MAZDA) 21 Novembre 1990,

## Description

La présente invention concerne un antivol de direction pour véhiculé automobile.

L'invention concerne plus particulièrement un antivol pour véhicule automobile équipé d'une boîte de vitesses automatique dont la commande est assurée au moyen d'un levier susceptible d'occuper une position de repos, notamment une position de parking, qui est détectée par un capteur dont le signal de sortie est le paramètre de commande d'un électro-aimant dont le noyau mobile assure le blocage en rotation d'un organe rotatif d'un verrou de l'antivol lorsque le levier n'occupe pas la position de repos, et du type dans lequel le noyau mobile est sollicité élastiquement par un ressort de rappel vers sa position sortie de blocage de l'organe rotatif du verrou.

Une telle conception d'un antivol permet, en association avec une boîte de vitesses automatique d'éviter que le conducteur n'arrête son véhicule et quitte celui-ci sans avoir procédé à la mise en position de parking du levier de changement de vitesses.

En effet, grâce à la présence de l'antivol de blocage, et tant que le levier n'est pas dans la position de parking, le verrou de l'antivol demeure bloqué dans une position angulaire, également appelée position accessoire, dans laquelle il ne peut pas extraire la clef hors du verrou de l'antivol.

Par contre, si le conducteur amène le levier de commande de la boîte de vitesses dans la position de parking, un circuit électronique de commande transmet alors un signal de sortie à l'électroaimant qui provoque le retrait du noyau mobile à l'encontre de l'effort qui lui est appliqué par le ressort de rappel et le conducteur peut alors faire tourner librement le barillet du verrou jusqu'à la position "stop" dans laquelle il peut extraire la clef du verrou.

Il est bien entendu nécessaire de prévoir le cas d'une défaillance du système d'alimentation électrique de l'électroaimant afin de permettre au conducteur de quitter le véhicule en emportant la clef de commande du verrou de l'antivol.

A cet effet, il est connu un antivol du type mentionné précédemment du type comportant un organe de commande manuelle du retrait du noyau mobile à l'encontre de l'effort élastique de rappel.

Grâce à un tel organe de commande manuelle, le conducteur peut agir mécaniquement sur l'organe de commande pour provoquer le retrait ou l'effacement du noyau mobile à l'encontre de l'effort qui lui est appliqué par le ressort de rappel et tourner ensuite la clef en position stop afin de pouvoir extraire cette dernière.

Selon une conception connue, un tel organe de commande est réalisé sous la forme d'un levier ou basculeur articulé dont la conception est complexe, coûteuse et dont la manipulation par le conducteur est peu aisée.

Un antivol de direction ayant les caractéristiques du préambule de la revendication 1 est décrit dans le document DE-A-4 206 251.

La présente invention a pour but de proposer une nouvelle conception d'un antivol du type mentionné précédemment qui permet de remédier à ces inconvénients.

Dans ce but, l'invention propose un antivol présentant les caractéristiques de la revendication 1.

Selon d'autres caractéristiques de l'invention :
- le poussoir est rappelé élastiquement vers une position de repos dans laquelle le noyau mobile est libre de se déplacer entre sa position sortie de blocage et une position rentrée vers laquelle il est rappelé lorsque l'électroaimant est alimenté électriquement ;
- le poussoir comporte une fente longitudinale pour le passage de la portion d'extrémité libre du noyau mobile ;
- la rampe inclinée est formée sur deux bords longitudinaux parallèles du poussoir qui délimitent la fente longitudinale ;
- l'épaulement radial du noyau mobile est tronconique ;
- le boîtier de l'antivol comporte un corps qui reçoit le verrou et dont un logement reçoit l'électroaimant et qui délimite une glissière dans laquelle le poussoir est monté coulissant ;
- l'électroaimant est fixé dans un logement ouvert du boîtier par un capot qui comporte un bec de retenue du poussoir qui s'étend à travers la fente longitudinale de ce dernier et qui coopère avec un bord transversal d'extrémité de la fente pour déterminer la position de repos du poussoir ;
- l'extrémité libre du noyau mobile est une tige cylindrique qui est susceptible d'être reçue dans un cran de blocage formé dans la paroi cylindrique d'un organe lié en rotation au rotor du verrou ;
- le poussoir est monté coulissant selon une direction parallèle à l'axe général du verrou ;
- le poussoir est agencé adjacent au verrou et comporte une tête d'actionnement agencée à proximité de la fente d'introduction de la clef dans le verrou.

D'autres caractéristiques et avantages de l'invention apparaîtront à la lecture de la description détaillée qui va suivre pour la compréhension de laquelle on se reportera aux dessins annexés dans lesquels :
- La figure 1 est une vue en perspective éclatée qui illustre le boîtier principal d'un antivol, l'électroaimant de blocage du verrou, le capot de retenue de l'électroaimant et le poussoir de déblocage associé à son ressort de rappel ;
- la figure 2 est une vue en section axiale selon l'axe général du verrou et l'axe de l'électroaimant qui illustre l'antivol de la figure 1 réalisé conformément aux enseignements de l'invention ;
- la figure 3 est une vue partielle et à plus grande échelle prise en section selon la ligne 3-3 de la figure 2 sur laquelle l'antivol est représenté dans une position accessoire dans laquelle l'électroaimant est alimenté électriquement et dans laquelle le poussoir de déblocage est relâché ;
- la figure 4 est une vue similaire à celle de la figure 3 dans laquelle l'électroaimant n'est pas alimenté pour assurer le blocage en rotation du barillet du verrou ; et
- la figure 5 est une vue similaire à celle de la figure 4 dans laquelle le poussoir est illustré en position effacée afin de permettre un déblocage manuel du rotor du verrou.

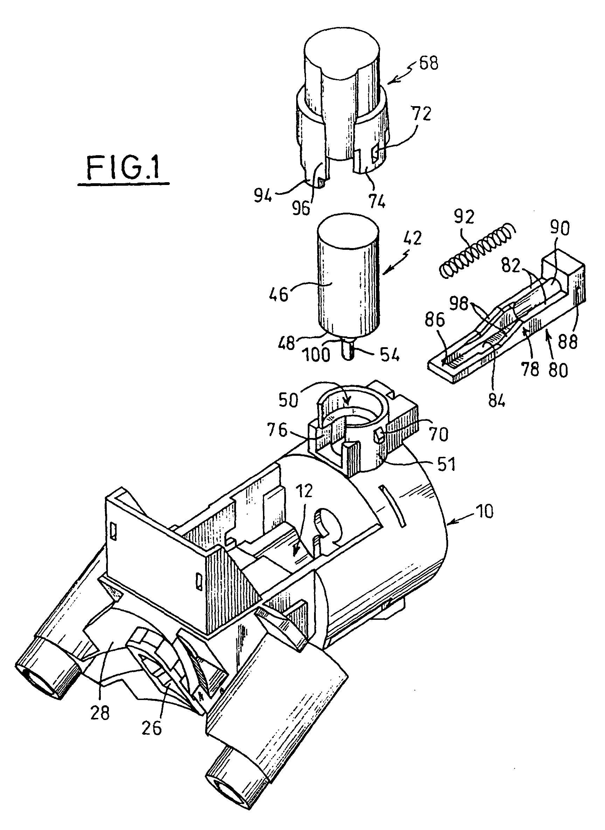

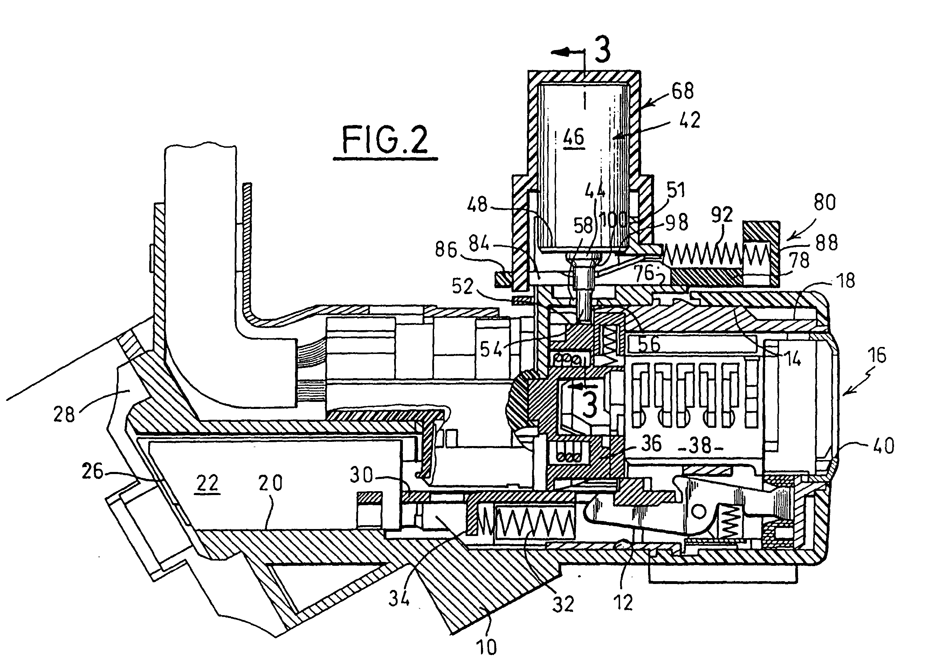

On a représenté sur les figures 1 et 2 un boîtier 10 destiné à être associé au boîtier de guidage en rotation de la colonne de direction (non représentée) qui est de forme générale cylindrique et dont un alésage interne 12 reçoit, fixé en rotation et en translation axiale, un stator 14 d'un verrou 16.

Le stator 14 est un élément de forme générale annulaire cylindrique dont une première partie avant, à gauche en considérant la figure 2, est agencée dans l'alésage 12, et dont une seconde partie arrière 18 est agencée à l'extérieur de l'alésage 12.

A sa partie arrière, à gauche en considérant la figure 2, le boîtier 10 comporte également un couloir 20 formant glissière et qui reçoit en coulissement, selon une direction axiale parallèle à l'axe de l'alésage 12 et du stator 14, un pêne de verrouillage 22 qui est monté coulissant entre sa position effacée illustrée sur la figure 2 dans laquelle son extrémité avant 26 est en retrait par rapport à la face cylindrique d'extrémité 28 de la partie du boîtier 10 destinée à coopérer avec un tube de la colonne de direction, et une position de verrouillage (non représentée sur les figures) dans laquelle son extrémité avant 26 fait saillie à l'extérieur du couloir 22 pour être reçue dans un logement (non représenté) de l'arbre de direction.

Le pêne 22 est relié en translation axiale à une tirette 30 qui est reçue en coulissement dans une fente de guidage formée dans la partie avant du stator 14.

Un ressort de verrouillage 32 sollicite axiatement le pêne 22 vers sa position de verrouillage en agissant sur une patte de réaction 34 formée sur la tirette 30.

La tirette 30 et le pêne 22 sont ainsi en permanence sollicités axialement vers l'avant en position de verrouillage de la colonne de direction.

Les déplacements axiaux de la tirette 30, selon une technique connue, sont assurés au moyen d'un organe rotatif de commande 36, comportant notamment une came de commande qui coopère avec un doigt de commandé lié à la tirette.

L'organe rotatif d'actionnement 36 présente une forme générale cylindrique et il est monté à rotation dans le stator 14 pour être entraîné en rotation par le rotor ou barillet 38 du verrou 16 lorsque la clef correspondante est introduite dans le verrou par une ouverture 40 formée à l'extrémité droite de ce dernier.

L'antivol 10 illustré aux figures 1 et 2 est prévu pour équiper un véhicule automobile muni d'une boîte de vitesses automatique.

Pour des impératifs de sécurité, il est nécessaire que lorsque le véhicule est à l'arrêt en position de parking, le levier de changement de vitesse (non représenté) soit dans une position de repos appelée position de parking.

Afin de garantir la mise en position de parking du levier de changement de vitesse, il est prévu, selon une conception connue, un électroaimant 42 dont l'alimentation électrique est commandée par un circuit de commande (non représenté) en fonction d'un signal de commande qui lui est transmis par un capteur de la présence ou non en position de parking du levier de changement de vitesse.

Plus précisément, tant que le levier de changement de vitesse n'est pas en position de parking, la bobine de l'électroaimant 42 n'est pas alimentée.

Comme on peut le voir sur les figures 1 et 2, l'extrémité inférieure 48 du corps 46 de l'électroaimant 42 est reçue dans un logement 50 réalisé venu de matière par moulage avec le boîtier de l'antivol 10 et qui est agencé à la verticale au-dessus d'une portion de surface cylindrique 52 de l'organe rotatif d'entraînement 36.

La portion d'extrémité libre en forme de tige cylindrique 54 du noyau mobile 44 est susceptible de faire saillie radialement à l'intérieur du stator 14 à travers une ouverture 56 formée dans ce dernier et à travers une ouverture 58 formée dans la portion de paroi en vis-à-vis du boîtier 10.

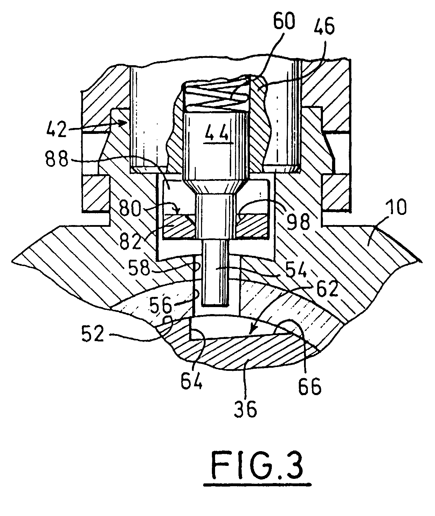

Comme on peut le voir notamment sur la figure 3, le noyau mobile 44 de l'électroaimant est sollicité élastiquement en permanence par un ressort hélicoïdal de compression 60 qui sollicite le noyau mobile verticalement vers le bas en considérant les figures 2 à 5, c'est-à-dire vers une position sortie du noyau mobile lorsque l'électroaimant 42 n'est pas alimenté en courant.

La portion d'extrémité libre en forme de tige cylindrique 54 qui passe à travers les trous 56 et 58 est ainsi susceptible d'être reçue dans un cran de blocage 62 formé dans la paroi cylindrique 52 de l'organe rotatif d'actionnement 36.

Comme on peut le voir notamment sur la figure 3, le cran 62 est délimité par une surface radiale de butée 64 et par une surface 66 permettant le dégagement de l'extrémité 54 du noyau mobile 44 hors du cran 62, à rencontre de l'effort exercé par le ressort 60 lorsque l'organe rotatif d'entraînement 36 lié au rotor du verrou 16 tourne dans le sens anti-horaire en considérant la figure 3.

La fixation de l'électroaimant dans le logement 50 est assurée au moyen d'un capot de fixation 68 qui est emboîté élastiquement sur la partie 51 du boîtier de l'antivol 10 dans laquelle est formé le logement 50 grâce à des ergots 70 qui sont reçus dans des trous 72 formés dans la partie inférieure 74 du capot 68.

La partie de boîtier 51 comporte également une glissière 76 qui est ouverte à ses deux extrémités et qui reçoit en coulissement axial, selon une direction parallèle à l'axe général du verrou 16, le corps 78 d'un poussoir 80 de déblocage du noyau mobile 44.

Comme on peut le voir aux figures 1 et 2, le corps 78 du poussoir 80 est essentiellement constitué par deux joues latérales parallèles 82 qui délimitent entre elles une fente longitudinale 84 et qui sont reliées entre elles à une extrémité par un bord transversal de liaison 86 et à l'autre extrémité par une partie massive 88 constituant une tête d'actionnement du poussoir 80.

Au voisinage de la tête 88, les deux joues 82 sont reliées par une partie complémentaire qui délimite un logement longitudinal semi-cylindrique 90 qui sert de guidage à un ressort de rappel hélicoïdal de compression 92 qui prend appui à l'une de ses extrémités contre la tête 88 et à l'autre extrémité contre une partie correspondante de la portion 51 du boîtier 10.

Le ressort 92 sollicite élastiquement en permanence le poussoir 80 vers sa position de repos illustrée notamment sur la figure 2 dans laquelle il est retenu en position par un bec de retenue 94 formé sur un prolongement 96 de la partie inférieure 74 du capot 68 de retenue de l'électroaimant 12 qui s'étend à travers la fente 84.

Comme on peut le voir aux figures 1 et 2, les deux joues latérales 82 comportent chacune une rampe inclinée 98 qui est susceptible de coopérer, comme cela sera expliqué par la suite, avec un épaulement tronconique 100 du noyau mobile 44 de l'électroaimant 42.

Dans la position des composants illustrés sur la figure 3, qui est également appelée position accessoire de l'antivol, l'électroaimant 42 est alimenté électriquement et le levier de commande de la boîte de vitesses automatique est en position de parking.

Comme on le voit sur cette figure 3, dans laquelle le poussoir 80 est illustré dans sa position relâchée, le noyau mobile 44 est dans sa position effacée, également appelée position de retrait, verticalement vers le haut vers laquelle il est rappelé électromagnétiquement par la bobine 46 de l'électroaimant 42 à l'encontre de l'effort qui lui est appliqué par le ressort 60 qui est comprimé.

Dans cette position, l'extrémité libre 54 du noyau mobile 44 est agencée en dehors du cran de blocage 62 et le rotor du verrou 16 lié en rotation à l'organe d'actionnement 36 est libre de tourner jusqu'à une position stop (non représentée sur les figures) dans laquelle la clef peut être extraite du verrou.

Durant toutes les autres phases de fonctionnement normal de l'antivol, le noyau mobile ou plongeur 44 de l'électroaimant 42 est en contact, par sa tige d'extrémité libre 54 avec la surface cylindrique externe 52 de l'organe de commande rotatif 36.

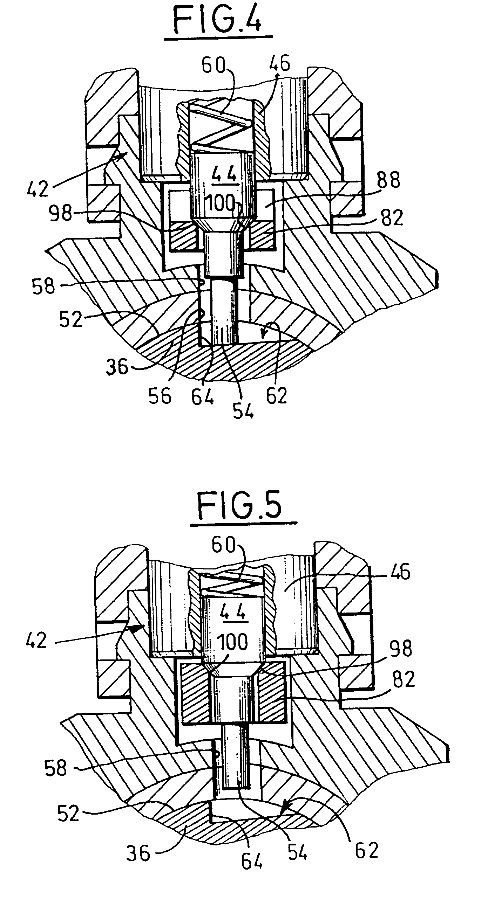

Dans la position accessoire illustrée sur la figure 4, et lorsque le levier de changement de vitesse de la boîte automatique n'est pas en position de parking, la bobine 46 de l'électroaimant 42 n'est pas alimentée et le plongeur 44 est en position sortie, sous l'action du ressort 60, dans laquelle l'extrémité libre en forme de tige cylindrique 54 est reçue dans le cran de blocage 62.

Dans cette position, dans laquelle le poussoir 80 est dans sa position relâchée, il est impossible de faire tourner l'organe 36 dans le sens horaire pour ramener le verrou dans la position stop et il est donc impossible d'extraire la clef.

Si l'utilisateur veut extraire la clef du verrou 16 de l'antivol 10, il doit amener le levier de changement de vitesse dans la position de parking ce qui provoque l'alimentation de l'électroaimant 42 et l'effacement du noyau mobile 44, les composants occupant donc alors à nouveau leurs positions illustrées sur la figure 3.

En cas de défaillance du système d'alimentation électrique du véhicule, ou de la partie de ce dernier qui est destinée à alimenter l'électro-aimant 42, il est possible de procéder au déblocage en rotation de l'organe 36 grâce au poussoir 80.

En effet, il suffit alors au conducteur d'exercer un effort, de la droite vers la gauche en considérant la figure 2, sur la tête d'actionnement 88 du poussoir 80 à l'encontre de l'effort de rappel qui lui est appliqué par le ressort 92 pour provoquer un effacement ou retrait du plongeur 44 et de son extrémité libre en forme de tige cylindrique 54, à l'encontre du ressort de rappel 60 du fait de la coopération des rampes 98 avec l'épaulement tronconique 100.

Lorsque le conducteur enfonce le poussoir 80, les composants occupent la position illustrée sur la figure 5 dans laquelle le conducteur peut faire tourner le rotor du verrou lié en rotation à l'organe rotatif d'entraînement 36 qui est libre de tourner du fait du dégagement de l'extrémité 54 hors du cran de blocage 62.

Après avoir amené le rotor du verrou en position stop et extrait la clef, le conducteur peut relâcher le poussoir, l'extrémité 54 du plongeur 44 venant alors en contact avec la surface cylindrique 52 de l'organe rotatif d'entraînement 36 rendant ainsi possible la commande à nouveau de la mise en marche du véhicule au moyen du verrou 14.

## Revendications

1. Antivol de direction (10) pour véhicule automobile équipé d'une boîte de vitesses, automatique, dont la commande est assurée au moyen d'un levier susceptible d'occuper une position de repos, notamment de parking, qui est détectée par un capteur dont le signal de sortie est le paramètre de commande d'un électroaimant (42) dont le noyau mobile (44) assure le blocage en rotation d'un organe rotatif (36) d'un verrou (16) de l'antivol (10) lorsque le levier n'occupe pas ladite position de repos, du type dans lequel le noyau mobile (44) est sollicité élastiquement par un ressort de rappel (60) vers sa position sortie de blocage de l'organe rotatif (36) du verrou (16), et du type comportant un organe (80) de commande manuelle du retrait du noyau mobile (44) à l'encontre de l'effort élastique de rappel, **caractérisé en ce que** l'organe de commande manuelle (80) est un poussoir monté coulissant sur le boîtier (10) de l'antivol dans une direction perpendiculaire à la direction de déplacement du noyau mobile (44) et qui comporte une rampe inclinée (98) qui coopère avec un épaulement (100) formé sur le noyau mobile (44) et **en ce que** l'extrémité libre (54) du noyau mobile (44) est une tige qui est susceptible d'être reçue dans un cran de blocage (62) formé dans la paroi cylindrique (52) d'un organe (36) lié en rotation au rotor du verrou (16).

2. Antivol de direction selon la revendication 1, **caractérisé en ce que** le poussoir (80) est rappelé élastiquement (92) vers une position de repos dans laquelle le noyau mobile (44) est libre de se déplacer entre sa position sortie de blocage et une position rentrée vers laquelle il est rappelé lorsque l'électroaimant (42) est alimenté électriquement.

3. Antivol de direction selon l'une des revendications 1 ou 2, **caractérisé en ce que** le poussoir (80) comporte une fente longitudinale (84) pour le passage de la portion d'extrémité libre (54) du noyau mobile (44).

4. Antivol de direction selon la revendication 3, **caractérisé en ce que** la rampe inclinée (98) est formée sur deux bords longitudinaux parallèles (82) du poussoir (80) qui délimitent la fente longitudinale (84).

5. Antivol de direction selon l'une quelconque des revendications précédentes, **caractérisé en ce que** l'épaulement radial (100) du noyau mobile (44) est tronconique.

6. Antivol de direction selon l'une quelconque des revendications précédentes, **caractérisé en ce que** le boîtier (10) de l'antivol comporte un corps qui reçoit le verrou (16) et dont un logement (50) reçoit l'électroaimant (42) et qui délimite une glissière (76) dans laquelle le poussoir (80) est monté coulissant.

7. Antivol de direction selon la revendication 6, prise en combinaison avec les revendications 2 et 3, **caractérisé en ce que** l'électroaimant (42) est fixé dans un logement ouvert (50) du boîtier par un capot (68) qui comporte un bec (96) de retenue du poussoir (80) qui s'étend à travers la fente longitudinale de ce dernier et qui coopère avec un bord transversal (84) d'extrémité de la fente pour déterminer la position de repos du poussoir (80).

8. Antivol de direction selon l'une quelconque des revendications précédentes, **caractérisé en ce que** le poussoir (80) est monté coulissant selon une direction parallèle à l'axe général du verrou (16).

9. Antivol de direction selon la revendication 8, **caractérisé en ce que** le poussoir (80) est agencé adjacent au verrou (16) et comporte une tête d'actionnement (88) agencée à proximité de la fente d'introduction de la clef dans le verrou (16).

## Claims

1. A steering lock (10) for a motor vehicle equipped with an automatic gearbox, the control of which is obtained by means of a lever adapted to occupy a rest position, in particular a park position, which is detected by a sensor the output signal of which is the control parameter of an electromagnet (42), the movable core (44) of which blocks a rotary member (36) of a lock unit (16) of the steering lock (10) against rotation when the lever is not occupying the said rest position, being of the type in which the movable core (44) is biased elastically by a return spring (60) towards its deployed position for blocking rotary movement of the rotary member (36) of the lock unit (16), and of the type including a manually controlled member (80) for retracting the movable core (44) against the elastic return force, **characterised in that** the manual control member (80) is a pusher which is mounted for sliding movement on the housing (10) of the steering lock, in a direction at right angles to the direction of displacement of the movable core (44), and which includes an inclined ramp (98) that co-operates with a shoulder (100) formed on the movable core (44), and **in that** the free end portion (54) of the movable core (44) is a rod which is adapted to be received in a stop recess (62) formed in the cylindrical wall (52) of a member (36) coupled in rotation to the rotor of the lock unit (16).

2. A steering lock according to Claim 1, **characterised in that** the pusher (80) is biased elastically (92) towards a rest position in which the movable core (44) is free to be displaced between its deployed blocking position and a retracted position, towards which it is returned when the electromagnet (42) is energised electrically.

3. A steering lock according to Claim 1 or Claim 2, **characterised in that** the pusher (8) has a longitudinal slot (84) for the passage therein of the free end portion (54) of the movable core (44).

4. A steering lock according to Claim 3, **characterised in that** the inclined ramp (98) is formed on two parallel longitudinal side portions (82) of the pusher (80) which define the longitudinal slot (84).

5. A steering lock according to any one of the preceding Claims, **characterised in that** the radial shoulder (100) of the movable core (44) is frusto-conical.

6. A steering lock according to any one of the preceding Claims, **characterised in that** the casing (10) of the steering lock comprises a body which receives the lock unit (16), and which has a housing (50) receiving the electromagnet (42) and defining a slide (76), in which the pusher (80) is mounted for sliding movement.

7. A steering lock according to Claim 6 taken in combination with Claims 2 and 3, **characterised in that** the electromagnet (42) is fixed in an open housing (50) of the casing by means of a hood (6) which includes, for retaining the pusher (80), a finger (96) which extends through the longitudinal slot of the latter and co-operates with a transverse end wall (86) of the slot so as to determine the rest position of the pusher (80).

8. A steering lock according to any one of the preceding Claims, **characterised in that** the pusher (80) is mounted for sliding movement in a direction parallel to the general axis of the lock unit (16).

9. A steering lock according to Claim 8, **characterised in that** the pusher (80) is arranged adjacent to the lock unit (16) and includes an actuating head (88) located close to the slot for introduction of the key into the lock unit (16).

## Patentansprüche

1. Lenkradschloß (10) für Kraftfahrzeuge mit einem Automatikgetriebe, dessen Betätigung anhand eines Schalthebels erfolgt, der eine Ruheposition, insbesondere eine Parkstellung, einnehmen kann, die durch einen Sensor erfaßt wird, dessen Ausgangssignal der Betätigungsparameter eines Elektromagneten (42) ist, dessen beweglicher Kern (44) die Drehsperre eines drehbaren Organs (36) eines Zylinderschlosses (16) des Lenkradschlosses (10) bewirkt, wenn der Schalthebel nicht die Ruheposition einnimmt, wobei der bewegliche Kern (44) durch eine Rückstellfeder (60) elastisch zu seiner ausgefahrenen Position mit Drehsperre des drehbaren Organs (36) des Zylinderschlosses (16) beaufschlagt wird und wobei ein manuelles Betätigungsorgan (80) für den Einzug des beweglichen Kerns (44) entgegen der elastischen Rückstellkraft vorgesehen ist, **dadurch gekennzeichnet, daß** das manuelle Betätigungsorgan (80) ein Drücker ist, der am Lenkradschloßgehäuse (10) entlang einer Richtung verschiebbar gelagert ist, die senkrecht zur Bewegungsrichtung des beweglichen Kerns (44) verläuft, und der eine Schräge (98) umfaßt, die mit einer auf dem beweglichen Kern (44) ausgebildeten Schulter (100) zusammenwirkt, und daß das freie Ende (54) des beweglichen Kerns (44) ein Zylinderstift ist, der in eine Sperraste (62) eingesetzt werden kann, die in der zylindrischen Wand (52) eines mit dem Rotor des Zylinderschlosses (16) drehfest verbundenen Organs (36) ausgebildet ist.

2. Lenkradschloß nach Anspruch 1, **dadurch gekennzeichnet, daß** der Drücker (80) elastisch (92) zu einer Ruheposition zurückgestellt wird, in der der bewegliche Kern (44) zwischen seiner ausgefahrenen Sperrposition und einer eingefahrenen Position frei verschiebbar ist, zu der er zurückgestellt wird, wenn der Elektromagnet (42) mit Strom versorgt wird.

3. Lenkradschloß nach einem der Ansprüche 1 oder 2, **dadurch gekennzeichnet, daß** der Drücker (80) einen Längsschlitz (84) für den Durchgang des freien Endabschnitts (54) des beweglichen Kerns (44) enthält.

4. Lenkradschloß nach Anspruch 3, **dadurch gekennzeichnet, daß** die Schräge (98) an zwei parallelen Längskanten (82) des Drückers (80) ausgebildet ist, die den Längsschlitz (4) begrenzen.

5. Lenkradschloß nach einem der vorangehenden Ansprüche, **dadurch gekennzeichnet, daß** die radiale Schulter (100) des beweglichen Kerns (44) kegelstumpfartig ausgeführt ist.

6. Lenkradschloß nach einem der vorangehenden Ansprüche, **dadurch gekennzeichnet, daß** das Lenkradschloßgehäuse (10) einen Körper umfaßt, der das Zylinderschloß (16) aufnimmt und von dem eine Aufnahme (50) den Elektromagneten (42) aufnimmt und der eine Gleitführung (76) begrenzt, in der der Drücker (80) verschiebbar gelagert ist.

7. Lenkradschloß nach Anspruch 6 in Kombination mit den Ansprüchen 2 und 3, **dadurch gekennzeichnet, daß** der Elektromagnet (42) in einer offenen Aufnahme (50) des Gehäuses durch eine Kappe (68) befestigt ist, die eine Haltenase (96) für den Drücker (80) umfaßt, die sich durch dessen Längsschlitz hindurch erstreckt und die mit einer Abschlußquerkante (84) des Schlitzes zusammenwirkt, um die Ruheposition des Drückers (80) zu bestimmen.

8. Lenkradschloß nach einem der vorangehenden Ansprüche, **dadurch gekennzeichnet, daß** der Drücker (80) entlang einer zur Gesamtachse des Zylinderschlosses (16) parallelen Richtung verschiebbar gelagert ist.

9. Lenkradschloß nach Anspruch 8, **dadurch gekennzeichnet, daß** der Drücker (80) am Zylinderschloß (16) angrenzend gelagert ist und einen Betätigungskopf (88) umfaßt, der in der Nähe des Schlitzes für die Einführung des Schlüssels in das Zylinderschloß (16) angeordnet ist.
